# EUROPEAN PATENT APPLICATION

(11) **EP 3 671 447 A1**
(43) Date of publication of application: **24.06.2020**
(21) Application number: 18215064.9
(22) Date of filing: 21.12.2018
(51) Int. Cl.: G06F 9/48, G06F 9/50

(54) **DISPATCHING METHOD AND EDGE COMPUTING SYSTEM**

(71) Applicant: XRSpace CO., LTD., Taoyuan City 330 (TW)
(72) Inventor: Chou, Peter, Taipei City 100 (TW); Chu, Feng-Seng, New Taipei City 235 (TW)
(74) Representative: Straus, Alexander

(57) **Abstract**

A task dispatching method (20), applied in an edge computing system (10) comprising an edge computing device (12) and a mobile device (14), is disclosed. The method comprises sending, by the mobile device (14), a resource inquiry message to the edge computing device through a connection (15)(202), wherein the connection comprises a wireless connection (13), a one-way transmission latency of the connection is less than 10 milliseconds, and the resource inquiry message comprises an inquiry of which resource type the edge computing device is equipped with; sending, by the edge computing device (12), a resource response message corresponding to the resource inquiry message (204); and determining, by the mobile device (14), to dispatch the second type of computing task to the edge computing device when the resource response message indicates that the edge computing device comprises the second computing device equipped with the second type of processor (206).

## Description

### Field of the Invention

The present disclosure relates to a dispatching method and an edge computing system, and more particularly, to a dispatching method and an edge computing system capable of obtaining information of a resource type of an edge computing device and dispatching a task accordingly.

### Background of the Invention

Edge computing attracts signification attention recently. Compared to cloud computing, edge computing devices are deployed by base stations, and in some situation, latency between the user and the edge computing device is much lower than latency between the user and the cloud computing device. Thus, the edge computing devices are suitable to perform tasks of real-time applications.

In some circumstance, some edge computing devices may be equipped with an additional processor, for example, a graphic processing units (GPU) or a tensor processing units (TPU). However, the mobile device may not have knowledge or information of what kind of processor is equipped with the edge computing device. For example, the mobile device may not know the edge computing device is equipped with the GPU therefore the edge computing device can efficiently execute 3D drawing operation. Thus, for controlling the risk of latency, the mobile device may not hand the real-time task suitable to be executed by the GPU to the edge computing device, such that efficiency of the edge computing device is degraded.

### Summary of the Invention

This in mind, the application aims at providing a dispatching method, an edge computing system and a mobile device capable of obtaining information of a resource type of an edge computing device and dispatching a computing task accordingly.

This is achieved by a dispatching method, an edge computing system and a mobile device according to claims 1, 2 and 3. The dependent claims pertain to corresponding further developments and improvements.

As will be seen more clearly from the detailed description following below, an embodiment of the present disclosure discloses a method of dispatching task. The method of dispatching task is applied in an edge computing system. The edge computing system comprises an edge computing device and a mobile device. The edge computing devices comprises a first computing device and/or a second computing device. The mobile device has a first type of computing task and a second type of computing task to be dispatched. The first computing device is equipped with a first type of processor but not equipped with a second type of processor, and the second computing device is equipped with both the first type of processor and the second type of processor. The method comprises sending, by the mobile device, a resource inquiry message to the edge computing device through a connection, wherein the connection comprises a wireless connection, a one-way transmission latency of the connection is less than 10 milliseconds, and the resource inquiry message comprises an inquiry of which resource type the edge computing device is equipped with; sending, by the edge computing device, a resource response message corresponding to the resource inquiry message, wherein the resource response message indicates whether the edge computing device comprises the second computing device equipped with the second type of processor; and determining, by the mobile device, to dispatch the second type of computing task to the edge computing device when the resource response message indicates that the edge computing device comprises the second computing device equipped with the second type of resource; wherein the first type of processor is suitable to execute the first type of the computing task compared to the second type of processor, and the second type of processor is suitable to execute the second type of the computing task compared to the first type of processor.

An embodiment of the present disclosure further discloses an edge computing system. The edge computing system comprises a mobile device, having a first type of computing task and a second type of computing task to be dispatched, configured to send a resource inquiry message to the edge computing device through a connection, wherein the connection comprises a wireless connection, a one-way transmission latency of the connection is less than 10 milliseconds, and the resource inquiry message comprises an inquiry of which resource type the edge computing device is equipped with; and an edge computing device, comprising a first computing device and/or a second computing device, configured to send a resource response message corresponding to the resource inquiry message, wherein the resource response message indicates whether the edge computing device comprises the second computing device equipped with the second type of processor, the first computing device is equipped with a first type of processor but not equipped with a second type of processor, and the second computing device is equipped with both the first type of processor and the second type of processor; wherein the mobile device determines to dispatch the second type of task to the edge computing device when the resource response message indicates that the edge computing device comprises the second computing device equipped with both the first type of processor and the second type of processor; wherein the first type of processor is suitable to execute the first type of the computing task compared to the second type of processor, and the second type of processor is suitable to execute the second type of the computing task compared to the first type of processor.

An embodiment of the present disclosure further discloses a mobile device, applied in an edge computing system. The edge computing system comprises an edge computing device. The edge computing devices comprises a first computing device and/or a second computing device. The first computing device is equipped with a first type of processor but not equipped with a second type of processor. The second computing device is equipped with both the first type of processor and the second type of processor. The mobile device sends a resource inquiry message to the edge computing device through a connection. The connection comprises a wireless connection. A one-way transmission latency of the connection is less than 10 milliseconds. The resource inquiry message comprises an inquiry of which resource type the edge computing device is equipped with. The edge computing device sends a resource response message corresponding to the resource inquiry message. The resource response message indicates whether the edge computing device comprises the second computing device equipped with the second type of processor. The mobile device determines to dispatch the second type of computing task to the edge computing device when the resource response message indicates that the edge computing device comprises the second computing device equipped with the second type of processor. The first type of processor is suitable to execute the first type of the computing task compared to the second type of processor, and the second type of processor is suitable to execute the second type of the computing task compared to the first type of processor.

### Brief Description of the Drawings

FIG. 1 is a schematic diagram of an edge computing system according to an embodiment of the present disclosure.
FIG. 2 is a schematic diagram of a dispatching process according to an embodiment of the present disclosure.
FIG. 3 is a timing sequence of the dispatching process in FIG. 2.

### Detailed Description

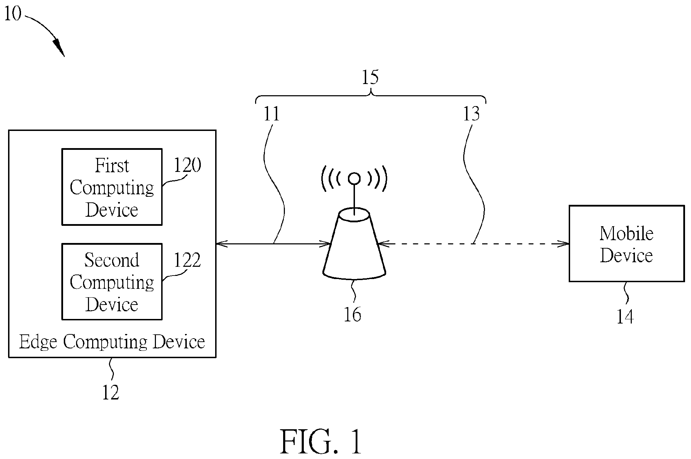

FIG. 1 is a schematic diagram of an edge computing system 10 according to an embodiment of the present disclosure. The edge computing system 10 comprises an edge computing device 12 and a mobile device 14. The mobile device 14 may be a phone, a tablet, a laptop, a virtual reality (VR) device, an augmented reality (AR) device, a mixed reality (MR) device, an extended reality (XR) device or a vehicular device (i.e., an electronic device disposed on a vehicle), but not limited thereto. The edge computing device 12 may be a computer cluster or a clustered computing system. The edge computing device 12 comprises at lease one of a first computing device 120 and a second computing device 122. The first computing device 120 and/or the second computing device 122 may be a computer or a server, disposed by a station 16. The edge computing device 12 and the station 16 may be wireline connected, which means that a wireline connection 11 is between the edge computing device 12 and the station 16. The station 16 may be a macro base station (or an eNodeB (evolved Node B)), a femto base station or an access point (AP). The mobile device 14 is located within a service coverage/area of the station 16 and served by the station 16 in wireless communication perspective, which means that the mobile device 14 and the station 16 are communicated through an air interface or a wireless connection 13, where the wireless connection 13, which may be 5G wireless communication system for example, is required to have low latency. Specifically, given that a connection 15 between the edge computing device 12 and the mobile device 14 may comprise the wireline connection 11 and the wireless connection 13, a one-way transmission latency, i.e., a transmission latency from the mobile device 14 to the edge computing device 12 or a transmission latency from the edge computing device 12 to the mobile device 14, of the connection 15 is less than 10 milliseconds. Since the latency if the connection 15 is low, the mobile device 14 can deliver at least a part of computing tasks to the edge computing device 12, for example, tasks of real-time applications.

In an embodiment, the first computing device 120 may be equipped with a first type of processor but not equipped with a second type of processor, the second computing device 122 may be equipped with both the first type of processor and the second type of processor. The first type of processor may be a central processing unit (CPU) and the second type of processor may be a graphics processing unit (GPU) or a tensor processing unit (TPU).

In this regard, the mobile device 14 always can dispatch a first type of computing task, which is a real-time application, to the edge computing device 12 and have the edge computing device 12 execute the first type of computing task using the CPU of the edge computing device 12, where the first type of computing task is suitable to be executed by a general purpose CPU. For example, for an autonomous vehicle application/scenario, the mobile device 14 may be disposed within an autonomous vehicle, and the first type of computing task may be a collision detection operation, based on images captured by camera disposed on the autonomous vehicle, since the collision detection operation is suitable to be executed by the general purpose CPU.

On the other hand, if the mobile device 14 has knowledge/information about the edge computing device 12 which comprises the second computing device 122 equipped with the second type of processor, the mobile device 14 may hand a second type of computing task, which may be a real-time application, to the edge computing device 12 (especially to the second computing device 122) and have the edge computing device 12 (or the second computing device 122) execute the second type of computing task using the second type of processor within the edge computing device 12, where the second type of computing task is suitable to be executed by the second type of processor. For example, for a VR application/scenario, the mobile device 14 may be a reality presenting device (e.g., a VR device), and the second type of computing task is a VR rendering operation, which is suitable to be executed by the GPU. Thus, a computation burden of the mobile device 14, especially the burden corresponding to the second type of computing task, can be shared by the edge computing device 12, and performance (for example, power consumption or efficiency) of the mobile device 14 can be improved, if the mobile device 14 knows that the edge computing device 12 is equipped with the GPU. Conversely, when mobile device 14 knows that edge computing device 12 does not have a GPU, mobile device 14 may not assign a second type of computing work to edge computing device 12, therefore, edge computing device 12 failing to complete dispatched tasks within a tolerable delay can be avoided.

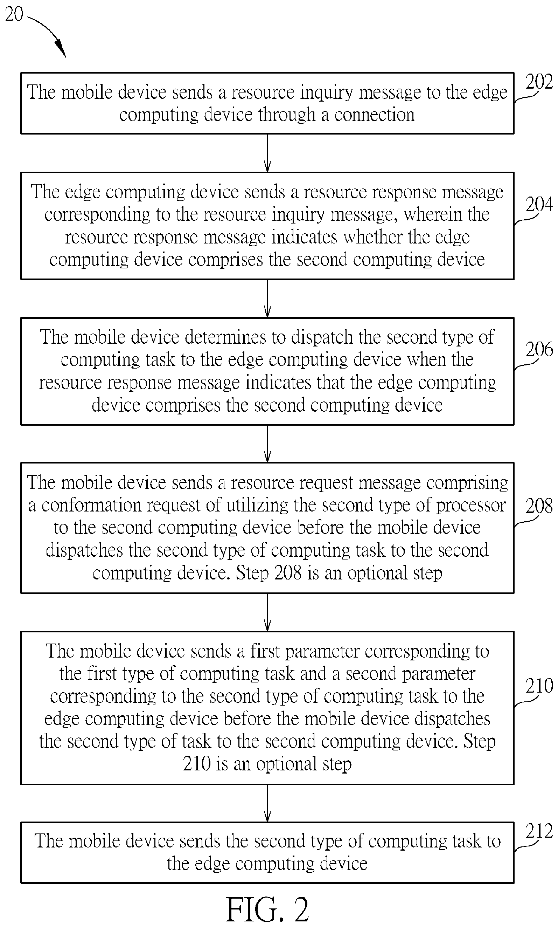

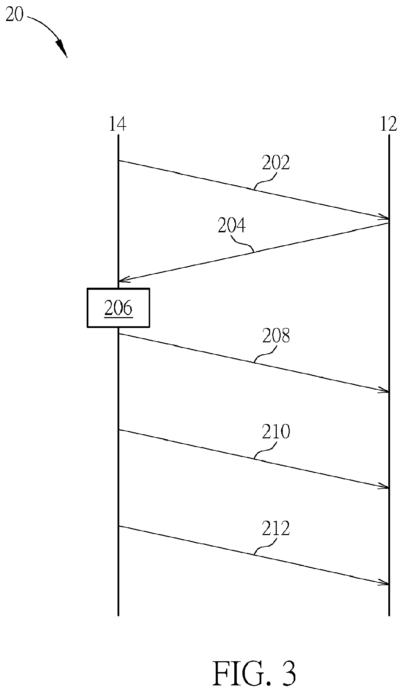

FIG. 2 is a schematic diagram of a dispatching process 20 according to an embodiment of the present disclosure. FIG. 3 is a timing sequence of the dispatching process 20. The dispatching process 20 is a protocol mainly for the mobile device 14 to have knowledge about whether the edge computing device 12 is equipped with the the second computing device. The dispatching process 20 comprises the following steps:
Step 202: The mobile device sends a resource inquiry message to the edge computing device through a connection.
Step 204: The edge computing device sends a resource response message corresponding to the resource inquiry message, wherein the resource response message indicates whether the edge computing device comprises the second computing device.
Step 206: The mobile device determines to dispatch the second type of computing task to the edge computing device when the resource response message indicates that the edge computing device comprises the second computing device.
Step 208: The mobile device sends a resource request message comprising a conformation request of utilizing the second type of processor to the second computing device before the mobile device dispatches the second type of computing task to the second computing device. Step 208 is an optional step.
Step 210: The mobile device sends a first parameter corresponding to the first type of computing task and a second parameter corresponding to the second type of computing task to the edge computing device before the mobile device dispatches the second type of task to the second computing device. Step 210 is an optional step.
Step 212: The mobile device sends the second type of computing task to the edge computing device.

In Step 202, the mobile device 14 may send a resource inquiry message RI to the edge computing device 12 through the connection 15. The resource inquiry message RI comprises an inquiry message of resource type with information of what kind of hardware resource the edge computing device 12 is equipped with. The resource inquiry message RI comprises an inquiry message of whether the edge computing device 12 comprises the second computing device 122. The format of the resource inquiry message RI and/or the inquiry message are not limited.

In Step 204, after the resource inquiry message RI is received by the edge computing device 12, in Step 204, the edge computing device 12 responses and sends a resource response message RR corresponding to the resource inquiry message RI. If the edge computing device 12 has the first computing device 120 but does not have the second computing device 122, the resource response message RR is "NO". If the edge computing device 12 has the second computing device 122 but does not have the first computing device 120, the resource response message RR is "Yes". If the edge computing device 12 has both the first computing device and the second computing device 122, the resource response message RR is "Yes".

The resource response message RR may indicate that the edge computing device 12 comprises the first computing device 120 only equipped with a first type of processor (e.g., the CPU), or the resource response message RR may indicate that the edge computing device 12 comprises the second computing device 122 equipped with a first type of processor equipped with both the first type of processor and the second type of processor (e.g., the GPU). In other words, the resource response message RR indicates whether the edge computing device 12 comprises the second computing device 122 which is equipped with the second type of processor.

In one embodiment, the resource response message RR indicates that the edge computing device 12 includes the number of first computing devices 120 and the number of second computing devices 122. For example, the resource response message RR indicates that in the edge computing device 12, the number of first computing devices 120 is five and the number of second computing devices 122 is eight. By accurately knowing the number of first computing devices 120 and the number of second computing devices 122, the mobile device 14 can more accurately estimate the capabilities of the edge computing device 12.

In Step 206, after the resource response message RR is received by the mobile device 14, the mobile device 14 determines to dispatch the second type of computing task to the second computing device 122 according to the resource response message.

In detail, the first type of computing tasks is more suitable for execution by the first type of processor (e.g. in the foregoing example, the collision detection operation of the self-driving car is more suitable for processing by the general purpose CPU), and the second type of computing tasks is more suitable for execution by the second type of processor (e.g. in the foregoing example, the VR color rendering operation is more suitable for processing by the GPU), and only the second computing device 122 has the second type of processor. Thus, when the resource response message RR indicates that the edge computing device 12 has the second computing device 122, it means at least a part of the computing devices in the edge computing device 12 has a second type of processor, such that the edge computing device 12 is adapted to be assigned a second type of computing tasks. Conversely, when the resource reply message RR indicating that the edge computing device 12 does not have the second computing device 122, it means all of the computing devices in the edge computing device 12 do not have a second type of processor, such that the edge computing device 12 may not be suitable for being dispatched the second type of computing tasks.

In Step 208, After the mobile device 14 determines to dispatch the second type of computing task (e.g., VR rendering operation) to the edge computing device 12, in Step 208, the mobile device 14 sends a resource request message RSR to the edge computing device 12, where the resource request message RSR comprises a request of utilizing the second type of processor (e.g., GPU). When the edge computing device 12 receives the mobile device 14, the edge computing device 12 may review its second type of processor to see if the second type of processor thereof are still available (for executing the second type of computing task), and sends an acknowledgement message ACK_R corresponding to the resource request message RSR back to the mobile device 14. With the confirmation request, the mobile device 14 can know whether the usage rate of the second type of processor is too high, such that the edge computing device 12 may not be suitable for being dispatched a second type of computing tasks or may be suitable for being dispatched a little portion of the second type of computing tasks. In another embodiment, the mobile device 14 simultaneously transmits the resource inquiry message RI and the resource request message RSR.

In Step 210, the mobile device 14 transmits at least one of the first parameter and the second parameter to the edge computing device 12, wherein the first parameter is corresponding to the first type of computing tasks and the second parameter is corresponding to the second type of computing tasks. For example, assume that the first type of computing task is a collision detection operation, and the first parameter may be a vehicle health parameter, a road condition parameter, or a GPS (global positioning system) parameter. As another example, assume that the second type of computing task is a VR color rendering operation, and the second parameter may be a screen size or a screen resolution of the mobile device 14. With the first parameter and the second parameter, the edge computing device 12 can more clearly know the device parameters or status parameters of the mobile device 14, thereby improving the performance of the edge computing device 12 (eg, by statistical analysis or machine learning method to speed up the calculation or reduce the consumption). In another embodiment, the mobile device 14 simultaneously transmits the resource inquiry message RI and the parameters.

In Step 212, the mobile device 14 dispatches a second type of computing task to the edge computing device 12.

In an embodiment, the mobile device 14 can be configured to determine whether to dispatch the first type of computing task to the edge computing device based on the resource response message RR. For example, when the resource response message RR indicates that the edge computing device 12 has both the first computing device and the second computing device, the mobile device 14 dispatches the first type of computing task and the second type of computing task to the edge computing device 12. For another example, when resource response message RR indicates that the edge computing device 12 has the first computing device but does not have the second computing device, the mobile device 14 dispatches the first type of computing work but does not dispatch the second type of computing task to the edge computing device 12.

In another embodiment, the mobile device 14 can be configured to dispatch or not dispatch the first type of computing task to the edge computing device 12 regardless of whether the edge computing device 12 has the first computing device. That is, the mobile device 14 can also be configured to alway dispatch the first type of computing task to the edge computing device 12 based on the resource response message RR.

In the prior art, the mobile device does not have knowledge of what kind of processor is equipped within the edge computing device. In comparison, the mobile device of the present disclosure is able to obtain the resource type of the edge computing device. Thereby, the mobile device of the present disclosure may hand a specific type of computing task which is suitable to be executed by a specific resource, such that a computation burden of the mobile device corresponding to the specific type of computing task can be shared by the edge computing device, and the power consumption of the mobile device can be reduce.

In summary, the mobile device of the present disclosure is able to obtain the resource type of the edge computing device and hand the specific type of computing task, for example a real-time application, which is suitable to be executed by the specific resource, such that the computation burden of the mobile device corresponding to the specific type of computing task can be shared by the edge computing device, and the power consumption of the mobile device can be reduce.

## Claims

1. A method of dispatching task (20), applied in an edge computing system (10) comprising an edge computing device (12) and a mobile device (14), the edge computing devices comprising at least one of a first computing device (120) and a second computing device (122), the mobile device having a first type of computing task and a second type of computing task to be dispatched, wherein the first computing device is equipped with a first type of processor but not equipped with a second type of processor, the second computing device is equipped with both the first type of processor and the second type of processor, **characterized in that** the method comprises:
sending, by the mobile device (14), a resource inquiry message to the edge computing device through a connection (15)(202), wherein the connection comprises a wireless connection (13), a one-way transmission latency of the connection is less than 10 milliseconds, and the resource inquiry message comprises an inquiry of which resource type the edge computing device is equipped with;
sending, by the edge computing device (12), a resource response message corresponding to the resource inquiry message (204), wherein the resource response message indicates whether the edge computing device comprises the second computing device equipped with the second type of processor; and
determining, by the mobile device (14), to dispatch the second type of computing task to the edge computing device (12) when the resource response message indicates that the edge computing device comprises the second computing device equipped with the second type of processor (206);
wherein the first type of processor is suitable to execute the first type of the computing task compared to the second type of processor, and the second type of processor is suitable to execute the second type of the computing task compared to the first type of processor.

2. An edge computing system (10), **characterized by** comprising:
a mobile device (14), having a first type of computing task and a second type of computing task to be dispatched, configured to send a resource inquiry message to the edge computing device through a connection (15) (202), wherein the connection comprises a wireless connection, a one-way transmission latency of the connection is less than 10 milliseconds, and the resource inquiry message comprises an inquiry of which resource type the edge computing device is equipped with; and
an edge computing device (12), comprising a first computing device (120), a second computing device (122) or both the first computing device and the second computing device, configured to send a resource response message corresponding to the resource inquiry message (204), wherein the resource response message indicates whether the edge computing device comprises the second computing device equipped with the second type of processor, the first computing device is equipped with a first type of processor but not equipped with a second type of processor, and the second computing device is equipped with both the first type of processor and the second type of processor;
wherein the mobile device determines to dispatch the second type of task to the second computing device when the resource response message indicates that the edge computing device comprises the second computing device equipped with both the first type of processor and the second type of processor (206);
wherein the first type of processor is suitable to execute the first type of the computing task compared to the second type of processor, and the second type of processor is suitable to execute the second type of the computing task compared to the first type of processor.

3. A mobile device (14), applied in an edge computing system (10),
wherein the edge computing system comprises an edge computing device (12), the edge computing devices comprises a first computing device (120), a second computing device (122) or both the first computing device and the second computing device, the first computing device is equipped with a first type of processor but not equipped with a second type of processor, the second computing device is equipped with both the first type of processor and the second type of processor;
**characterized in that** the mobile device (14) sends a resource inquiry message to the edge computing device through a connection, the connection comprises a wireless connection (15)(202), a one-way transmission latency of the connection is less than 10 milliseconds, and the resource inquiry message comprises an inquiry of which resource type the edge computing device is equipped with;
wherein the edge computing device (12) sends a resource response message corresponding to the resource inquiry message (204), wherein the resource response message indicates whether the edge computing device comprises the second computing device equipped with the second type of processor;
wherein the mobile device (14) determines to dispatch the second type of computing task to the second computing device when the resource response message indicates that the edge computing device comprises the second computing device equipped with the second type of processor (206);
wherein the first type of processor is suitable to execute the first type of the computing task compared to the second type of processor, and the second type of processor is suitable to execute the second type of the computing task compared to the first type of processor.

4. The method of claim 1, the edge computing system of claim 2, or the mobile device of claim 3, **characterized in that** the first type of processor is a central processing unit (CPU) and the second type of processor is a graphics processing unit (GPU) or a tensor processing unit (TPU).

5. The method of claim 1, the edge computing system of claim 2, or the mobile device of claim 3, **characterized in that** the first type of computing task and the second type of computing task are both real-time applications.

6. The method of claim 1, the edge computing system of claim 2, or the mobile device of claim 3, **characterized by** further comprising:
dispatching the first type of computing task to the edge computing device (12) when the resource response message indicates that the edge computing device comprises the first computing device equipped with the first type of processor.

7. The method of claim 1, the edge computing system of claim 2, or the mobile device of claim 3, **characterized by** further comprising:
sending, by the mobile device (14), a resource request message comprising a conformation request of utilizing the second type of processor to the second computing device before the mobile device dispatches the second type of computing task to the second computing device.

8. The method of claim 1, the edge computing system of claim 2, or the mobile device of claim 3, **characterized by** further comprising:
sending, by the mobile device (14), a first parameter corresponding to the first type of computing task and a second parameter corresponding to the second type of computing task to the edge computing device (12) before the mobile device dispatches the second type of task to the second computing device.
